# EUROPEAN PATENT APPLICATION

(11) **EP 4 173 493 A1**
(43) Date of publication of application: **03.05.2023**
(21) Application number: 21827943.8
(22) Date of filing: 24.06.2021
(51) Int. Cl.: A23L 29/206, A23L 29/231, A23L 29/256, A23L 29/269, A23L 33/00

(54) **LIQUID FOOD**

(30) Priority: 24.06.2020 JP 2020108300
(71) Applicant: San-Ei Gen F.F.I., INC., Toyonaka-shi, Osaka 561-8588 (JP)
(72) Inventor: TOYOIZUMI,Satoshi, Toyonaka-shi, Osaka 561-8588 (JP); NOMURA,Yuta, Toyonaka-shi, Osaka 561-8588 (JP)
(74) Representative: Cabinet Beau de Loménie
(86) International application number: PCT/JP2021/023909
(87) International publication number: WO 2021/261545

(57) **Abstract**

The present invention pertains to providing a means for suppressing the liquid phase separation of a liquid food containing a protein and/or a degradation product thereof, a lipid, and a salt containing calcium or magnesium. In addition, the present invention pertains to providing a novel means for controlling liquid phase separation, without impairing thickening properties, when a liquid food containing a protein and/or a degradation product thereof, a lipid, and a salt containing calcium or magnesium is being thickened. The present invention provides a liquid food or the like containing (A) a protein and/or a degradation product thereof, (B) a lipid, (C) a salt containing calcium or magnesium, and (D) low-molecular gum ghatti with a weight average molecular weight of 0.05×10⁶ to 0.7×10⁶.

## Description

### TECHNICAL FIELD

The present invention relates to a liquid food, a method for suppressing liquid phase separation of a liquid food or imparting an excellent thickening property to a liquid food, and an agent for the method.

### BACKGROUND ART

Conventionally, nasal or oral tube feeding, or gastrostomy or jejunostomy tube feeding is used for elderly people or patients who have difficulty in orally ingesting food. Nasal or oral tube feeding is a method in which nutrition such as a concentrated liquid food is continuously administered via a tube inserted from the nose or mouth to reach any site of the esophagus, stomach, duodenum, and jejunum, and gastrostomy/jejunostomy tube feeding is a method in which nutrition such as a concentrated liquid food is continuously administered via a tube placed by forming an external fistula surgically or endoscopically in a site from the esophagus to the jejunum (mostly the stomach).

Liquid foods such as such a concentrated liquid food are mainly those having a low viscosity (hereinafter referred to as general liquid food), and containing many proteins and lipids, and thus there is a problem that liquid phase separation occurs over time. Due to low viscosity, the retention in the stomach is poor, and there is also a risk of diarrhea and gastroesophageal reflux. As a countermeasure against that weakness, there is an option of slowing the rate of administration of a liquid food and an option of using a high viscosity type of liquid foods. However, the former is accompanied by the suffering of the care receiver and the risk of pressure ulcer due to the prolonged administration. The latter has a problem that administration by gravity fall through a tube having a small inner diameter, particularly a thin tube used in nasal tube feeding is difficult, administration routes are limited, and human hands and dedicated equipment for pressured administration are needed. Therefore, in recent years, there is an increasing need for an intragastrically thickening liquid food in which liquid phase separation over time is suppressed and that has advantages of both general liquid foods and high viscosity type liquid foods, and has a low viscosity at the time of administration and is thickened in the stomach after administration.

In response to such needs, various liquid foods have been developed. For example, Patent Document 1 discloses that an emulsified food composition containing a predetermined amount of lipid, a thickener that gels the emulsified food composition in an acidic region, gum arabic or gum ghatti, and a divalent metal salt is excellent in emulsion stability immediately after preparation.

### PRIOR ART DOCUMENT

### PATENT DOCUMENT

Patent Document 1: WO 2013/146181

### SUMMARY OF THE INVENTION

### PROBLEMS TO BE SOLVED BY THE INVENTION

However, when a liquid food further including a protein and/or a decomposition product thereof in addition to a lipid and a salt containing calcium or magnesium is prepared based on the technique of Patent Document 1, liquid phase separation is likely to occur and stability is insufficient when the liquid food is further stored in a static state after preparation.

Therefore, the present invention relates to the provision of a means for suppressing liquid phase separation during storage of a liquid food including a protein and/or a decomposition product thereof, a lipid, and a salt containing calcium or magnesium.

In addition, the present inventors have found a problem that in an aspect in which a liquid food including a protein or a decomposition product thereof, a lipid, and a salt containing calcium or magnesium is thickened in the stomach or the like, the thickening property is reduced depending on the component to be added.

Therefore, the present invention relates to the provision of a new means for suppressing liquid phase separation without impairing the thickening property in the case where the liquid food is thickened.

### MEANS FOR SOLVING THE PROBLEMS

The present inventors have completed the present invention based on the following new findings.

As a result of intensive studies, the present inventors have found that a liquid food in which liquid phase separation is suppressed can be produced by incorporating (D) a low molecular weight gum ghatti having a weight average molecular weight of 0.05 × 10⁶ to 0.7 × 10⁶ in addition to (A) a protein and/or a decomposition product thereof, (B) a lipid, and (C) a salt containing calcium or magnesium.

Furthermore, the present inventors have found that in an aspect in which the liquid food is thickened, the liquid food has an excellent thickening property.

The present invention includes the following aspects.
[1] A liquid food, including:
   (A) a protein and/or a decomposition product thereof;
   (B) a lipid;
   (C) a salt containing calcium or magnesium; and
   (D) a low molecular weight gum ghatti having a weight average molecular weight of 0.05 × 10⁶ to 0.7 × 10⁶.
[2] The liquid food according to [1], further including (E) a thickener that acts in presence of a divalent metal ion.
[3] The liquid food according to [1] or [2], which is ingested orally or via a tube and thickened by being mixed with gastric fluid in a stomach.
[4] The liquid food according to any one of [1] to [3], having a pH of 5.5 to 8.
[5] The liquid food according to any one of [1] to [4], wherein a content of the low molecular weight gum ghatti having a weight average molecular weight of 0.05 × 10⁶ to 0.7 × 10⁶ (D) is 0.05 to 2.5% by mass.
[6] A method for suppressing liquid phase separation of a liquid food or imparting an excellent thickening property to a liquid food, including the step of:
   incorporating (D) a low molecular weight gum ghatti having a weight average molecular weight of 0.05 × 10⁶ to 0.7 × 10⁶ into the liquid food,
   wherein the liquid food includes (A) a protein and/or a decomposition product thereof, (B) a lipid, and (C) a salt containing calcium or magnesium.
[7] The method according to [6], wherein the liquid food further includes (E) a thickener that acts in presence of a divalent metal ion.
[8] The method according to [6] or [7], wherein the liquid food is ingested orally or via a tube and thickened by being mixed with gastric fluid in a stomach.
[9] The method according to any one of [6] to [8], wherein an incorporation amount of the low molecular weight gum ghatti having a weight average molecular weight of 0.05 × 10⁶ to 0.7 × 10⁶ (D) is 0.05 to 2.5% by mass based on a total amount of the liquid food.
[10] An agent for suppressing liquid phase separation of a liquid food or imparting an excellent thickening property to a liquid food, comprising:
   (D) a low molecular weight gum ghatti having a weight average molecular weight of 0.05 × 10⁶ to 0.7 × 10⁶, wherein the liquid food includes (A) a protein and/or a decomposition product thereof, (B) a lipid, and (C) a salt containing calcium or magnesium.
[11] The agent according to [10], wherein the liquid food is ingested orally or via a tube and then thickened by being mixed with gastric fluid in a stomach.
[12] The agent according to [10] or [11], wherein the liquid food further includes (E) a thickener that acts in presence of a divalent metal ion.
[13] Use of (D) a low molecular weight gum ghatti having a weight average molecular weight of 0.05 × 10⁶ to 0.7 × 10⁶ for suppressing liquid phase separation of a liquid food or imparting an excellent thickening property to a liquid food, wherein the liquid food includes (A) a protein and/or a decomposition product thereof, (B) a lipid, and (C) a salt containing calcium or magnesium.
[14] The use according to [13], wherein the liquid food further includes (E) a thickener that acts in presence of a divalent metal ion.

### EFFECT OF THE INVENTION

According to the configuration of the present invention, liquid phase separation of a liquid food including a protein and/or a decomposition product thereof, a lipid, and a salt containing calcium or magnesium is suppressed.

Furthermore, when a liquid food including a protein and/or a decomposition product thereof, a lipid, and a salt containing calcium or magnesium is thickened, the liquid food of the present invention has an excellent thickening property.

### BRIEF DESCRIPTION OF THE DRAWINGS

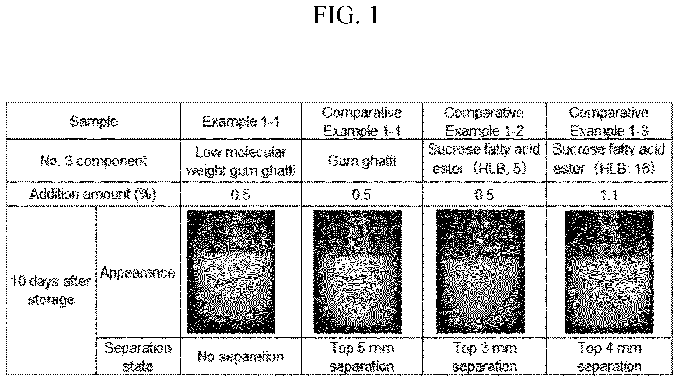

Fig. 1 shows photographs showing the appearances of liquid phases of intragastrically thickening liquid food samples containing different types of components as a No. 3 component after storage at 25°C for 10 days in Test Example 1. The white bars represent the transparent phase resulting from the separation.

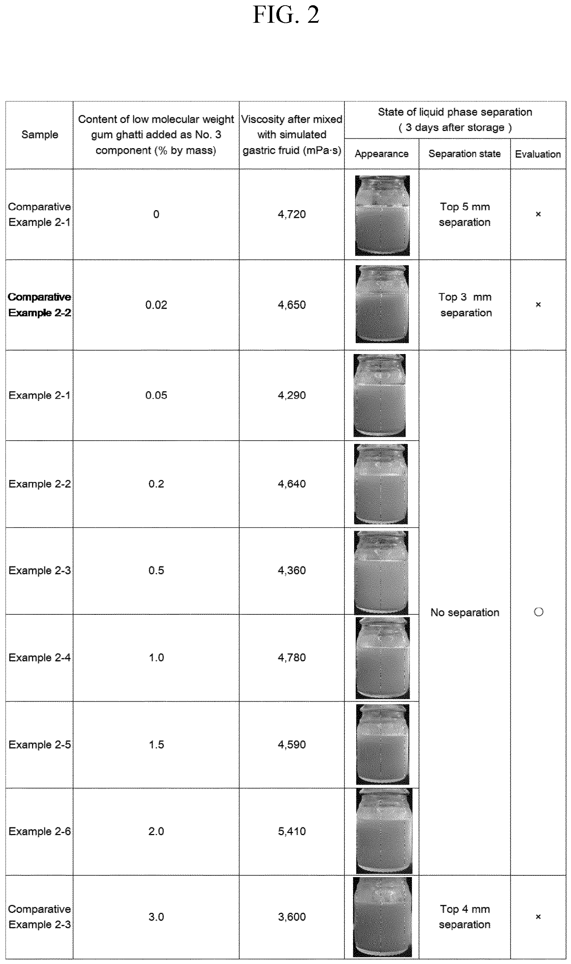

Fig. 2 shows photographs showing the appearances of liquid phases of the intragastrically thickening liquid food samples containing different amounts of a low molecular weight gum ghatti (weight average molecular weight of 150,000) as a No. 3 component after storage at 25°C for 3 days in Test Example 2. The white bars represent the transparent phase resulting from the separation.

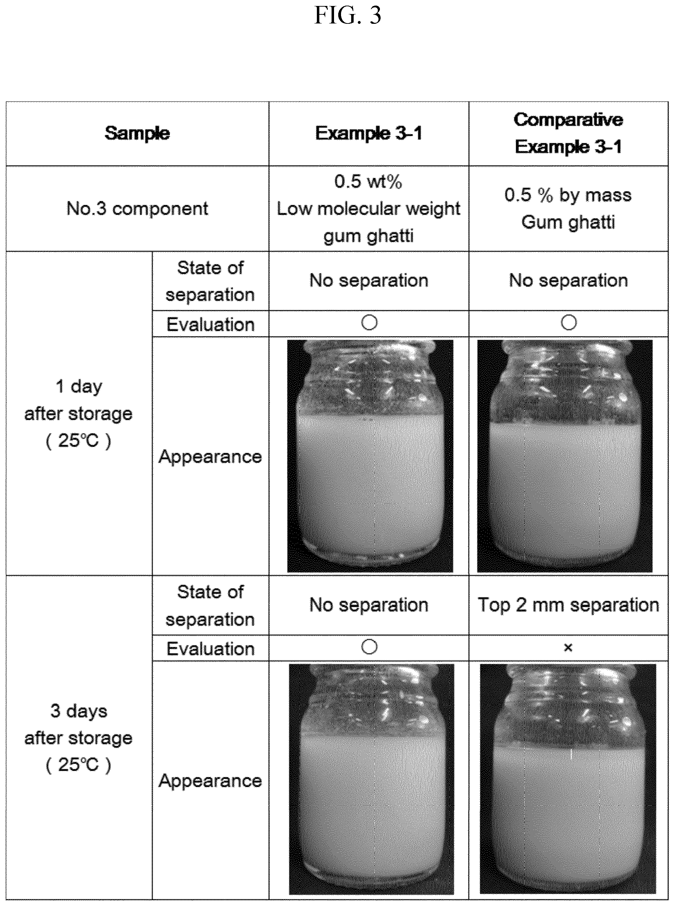

Fig. 3 shows photographs showing the appearances of liquid phases of intragastrically thickening liquid food samples containing a low molecular weight gum ghatti or gum ghatti as a No. 3 component after storage at 25°C for 1 day or 3 days in Test Example 3. The white bars represent the transparent phase resulting from the separation.

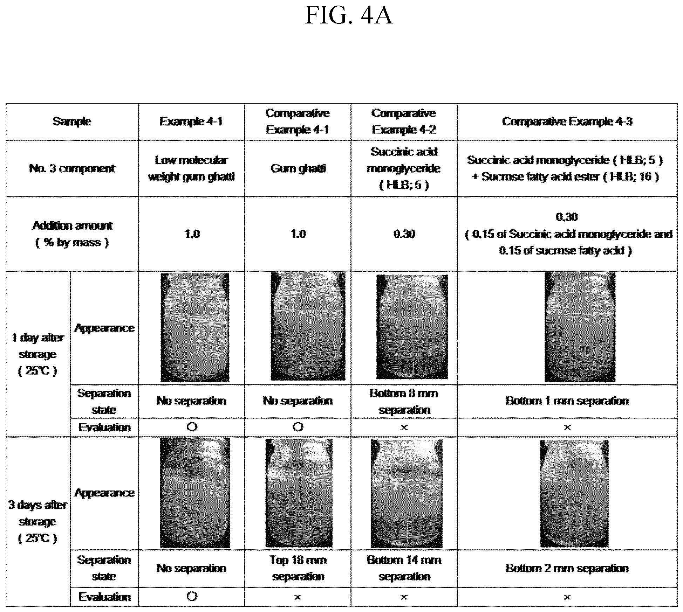

Fig. 4A shows photographs showing the appearances of liquid phases of general liquid food samples containing different types of components as a No. 3 component after storage at 25°C for 1 day or 3 days in Test Example 4. The white or black bars represent the transparent phases resulting from the separation.

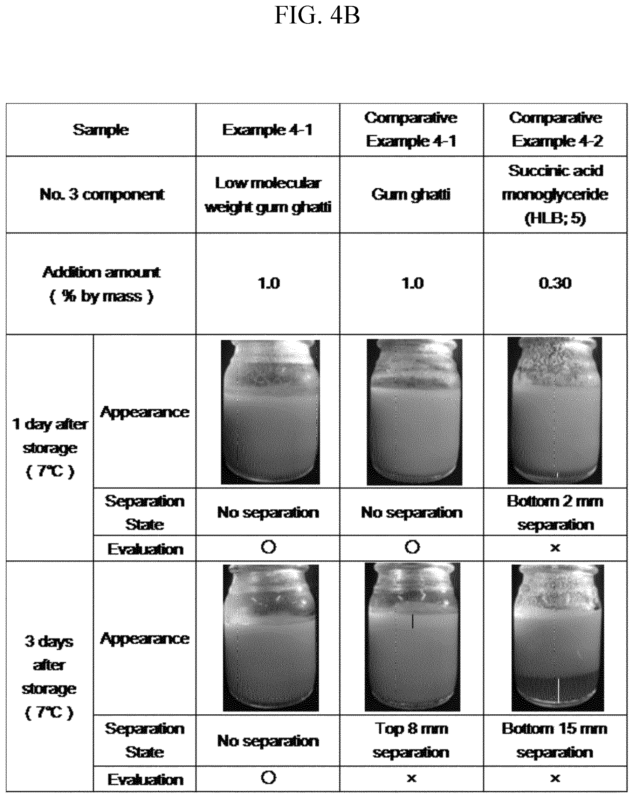

Fig. 4B shows photographs showing the appearances of liquid phases of general liquid food samples containing different types of components as a No. 3 component after storage at 7°C for 1 day or 3 days in Test Example 4. The white or black bars represent the transparent phases resulting from the separation.

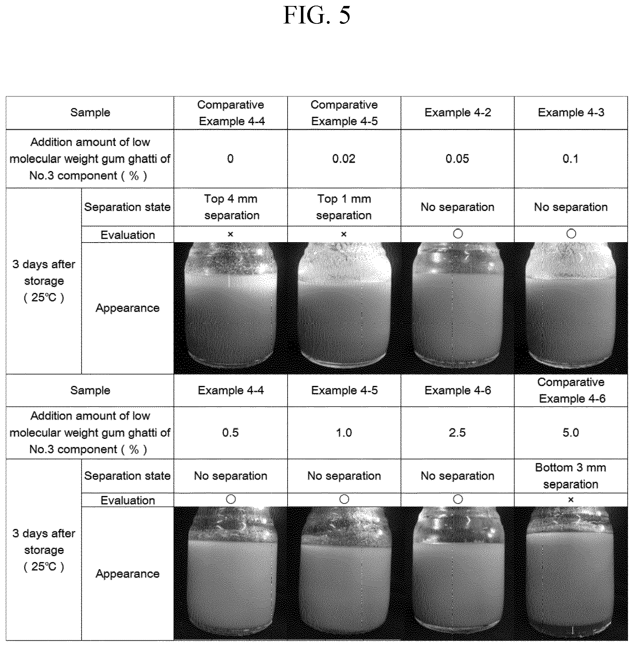

Fig. 5 shows photographs showing the appearances of liquid phases of general liquid food samples containing different amounts of a low molecular weight gum ghatti (weight average molecular weight of 150,000) as a No. 3 component after storage at 25°C for 1 day or 3 days in Test Example 4. The white bars represent the transparent phase resulting from the separation.

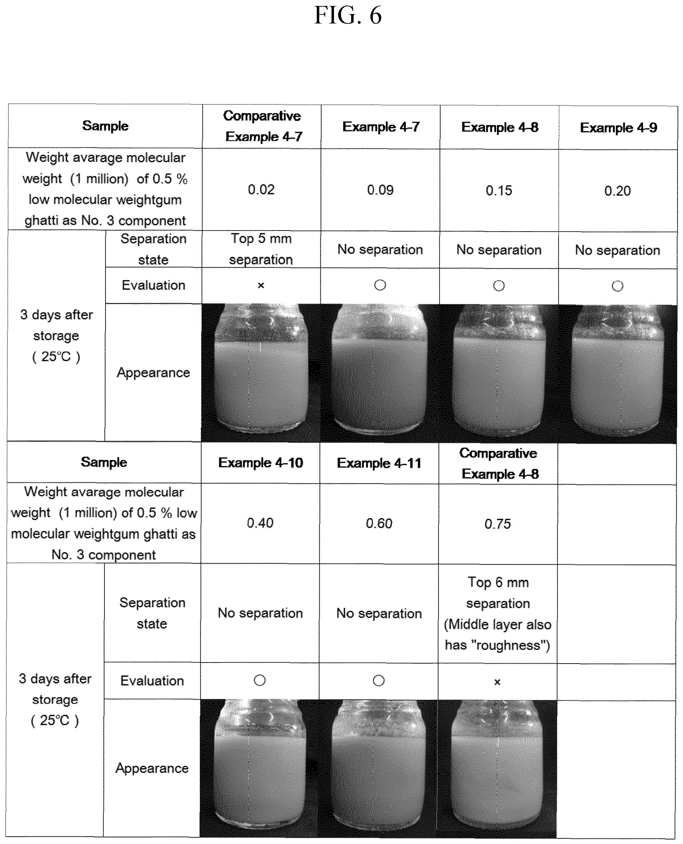

Fig. 6 shows photographs showing the appearances of liquid phases of general liquid food samples containing low molecular weight gum ghattis having different weight average molecular weights as a No. 3 component after storage at 25°C for 3 days in Test Example 4. The white bars represent the transparent phase resulting from the separation.

### MODE FOR CARRYING OUT THE INVENTION

In the present specification, the term "liquid phase separation" of a liquid food refers to a phenomenon in which when a liquid food is left to stand, a transparent phase appears in suspended particles in the liquid food over time as compared with that before being left to stand. That is, when a transparent phase is observed regardless of the presence or absence of precipitation or aggregation, it is considered that liquid phase separation has occurred.

In the present specification, the "thickening property" of a liquid food refers to a property that the viscosity value increases when the viscosity of the liquid food is measured. The thickening also includes a state in which the sample forms a gel. At that time, for example, when the formation of the gel is ununiform and the sample is separated into a gel portion and a liquid portion, the viscosity is less likely to increase, so that the thickening property is determined to be low, and conversely, when the entire sample is uniformly gelled, the viscosity is likely to increase, so that the thickening property is determined to be high.

In the present specification, the thickener "acting in the presence of a divalent metal ion" means that when two solutions have the same concentration of the thickener and differ only in the presence or absence of a divalent metal ion, the viscosity of the solution containing a divalent metal ion is higher than the viscosity of the other solution not containing a divalent metal ion.

The liquid food of the present invention includes: (A) a protein and/or a decomposition product thereof; (B) a lipid; (C) a thickener that acts in presence of a divalent metal ion; (C) a salt containing calcium or magnesium; and (E) a low molecular weight gum ghatti having a weight average molecular weight of 0.05 × 10⁶ to 0.7 × 10⁶.

### ((A) Protein and/or decomposition product thereof)

The liquid food of the present invention includes a protein and/or a decomposition product thereof as a component (A).

In the present specification, a protein and/or a protein decomposition product includes any one component alone selected from the group consisting of an amino acid, a peptide (polypeptides having less than 50 residues such as monopeptide, dipeptide, tripeptide, tetrapeptide, and oligopeptide), and a protein (polypeptides having 50 or more residues), or a combination of two or more thereof.

In general, a liquid food including at least a protein tends to be more likely to cause liquid phase separation in the presence of a lipid and a salt containing calcium or magnesium than a liquid food including only a protein decomposition product, but in the liquid food of the present invention, the liquid phase separation can be suppressed by incorporation of the component (D) even when a protein is used.

The type of a protein and/or a decomposition product thereof is not particularly limited, and examples thereof include any one component selected from the group consisting of animal-derived proteins such as milk-derived proteins (cow milk, skimmed milk powder, whole fat milk powder, milk protein concentrate, whey protein (whey), casein, lactoferrin and the like), egg proteins (egg white, albumin and the like), proteins derived from livestock meat and marine products, gelatin, and collagen; plant-derived proteins such as soybean proteins (defatted soy milk powder and the like), pea proteins, mung bean proteins, barley proteins, wheat proteins (gluten and the like), rice proteins, vegetable-derived proteins, and fruit-derived proteins; microorganism-derived proteins such as yeast-derived proteins; and decomposition products of these proteins, or a combination of two or more components thereof.

In particular, the component (A) of the present invention preferably contains, among others, at least one or two or more selected from the group consisting of milk-derived proteins, plant-derived proteins, and decomposition products thereof, and more preferably contains at least one or two or more selected from the group consisting of milk-derived proteins, soybean proteins, and decomposition products thereof.

When a milk-derived protein or a decomposition product thereof is used as the component (A), the component (A) preferably contains one or two or more selected from the group consisting of whey proteins (whey protein concentrate: WPC, whey protein isolate: WPI and the like), casein (including metal salts of casein such as sodium caseinate and calcium caseinate), skimmed milk powder, whole milk protein, milk protein concentrate (MPC), milk protein isolate (MPI), and decomposition products thereof. The milk protein concentrate is obtained by separating proteins contained in milk, and includes both casein and whey proteins. A whey protein is a water-soluble protein remaining when casein, fat, fat-soluble components and the like are removed from milk. Main components of whey proteins are proteins such as β-lactoglobulin, α-lactoglobulin, and lactoferrin, and can include lactose, water-soluble vitamins, and salts. Casein is a protein having a phosphate group contained in milk, dairy products and the like, and is a protein that precipitates when milk or the like is adjusted to be acidic.

The total content of the component (A) in the liquid food of the present invention is not particularly limited, but is preferably 0.5 to 20% by mass, more preferably 1 to 15% by mass, and still more preferably 2 to 10% by mass based on the total amount of the liquid food.

The total content of the component (A) in the liquid food of the present invention can be, for example, 0.5% by mass or more, 1% by mass or more, 1.5% by mass or more, or 2% by mass or more, and can be, for example, 20% by mass or less, 15% by mass or less, or 10% by mass or less based on the total amount of the liquid food.

### ((B) Lipid)

The liquid food of the present invention includes a lipid as the component (B). The lipid is not particularly limited, and examples thereof include vegetable oils such as rapeseed oil (canola oil), soybean oil, corn oil, rice oil, coconut oil, palm oil, safflower oil, sunflower oil, perilla oil, sesame oil, linseed oil, olive oil, cottonseed oil, peanut oil, and cocoa butter; animal oils such as fish oils (sardine oil, cod liver oil and the like), beef tallow, and lard; and long-chain fatty acid triglyceride (LCT), medium-chain fatty acid (having about 6 to 12 carbon atoms) triglyceride (MCT), docosahexaenoic acid, and eicosapentaenoic acid. Among them, from the viewpoint of enhancing the lipid absorbability, at least a MCT having 8 to 10 carbon atoms is preferably contained.

The liquid food of the present invention can include one of these lipids alone or two or more of these lipids.

The total content of the component (B) in the liquid food of the present invention is not particularly limited, but is preferably 0.1 to 30% by mass, more preferably 0.5 to 15% by mass, and still more preferably 1 to 10% by mass based on the total amount of the liquid food.

The total content of the component (B) in the liquid food of the present invention can be, for example, 0.1% by mass or more, 0.2% by mass or more, 0.5% by mass or more, or 1% by mass or more, and can be, for example, 30% by mass or less, 20% by mass or less, 15% by mass or less, or 10% by mass or less based on the total amount of the liquid food.

### ((C) Salt containing calcium or magnesium)

The liquid food of the present invention includes a salt containing calcium or magnesium as the component (C). As the component (C) of the present invention, salts containing one or both of calcium and magnesium can be used alone or in combination of two or more thereof.

The component (C) of the present invention is preferably a salt containing calcium.

The component (C) of the present invention is preferably insoluble or poorly soluble in neutral water and soluble in an acidic region. The component (C) that is insoluble or poorly soluble in neutral water and soluble in an acidic region is not particularly limited, and examples thereof include tricalcium phosphate, calcium monohydrogen phosphate, calcium dihydrogen phosphate, calcium stearate, calcium carbonate, calcium citrate, calcium gluconate, calcium sulfate, trimagnesium phosphate, and magnesium carbonate.

The total content of calcium and magnesium in the liquid food of the present invention is not particularly limited, but is preferably 0.01 to 5% by mass, more preferably 0.05 to 3% by mass, and still more preferably 0.2 to 2% by mass based on the total amount of the liquid food from the viewpoint of remarkably exhibiting the effect of the present invention.

The total content of calcium and magnesium in the liquid food of the present invention can be, for example, 0.01% by mass or more, 0.02% by mass or more, 0.05% by mass or more, or 0.2% by mass or more, and can be 5% by mass or less, 3% by mass or less, or 2% by mass or less based on the total amount of the liquid food.

### ((D) Low molecular weight gum ghatti)

The liquid food of the present invention includes a low molecular weight gum ghatti having a weight average molecular weight of 0.05 × 10⁶ to 0.7 × 10⁶ as the component (D). By applying a low molecular weight gum ghatti having such a molecular weight to a liquid food including the components (A) to (C), liquid phase separation during storage of the liquid food can be more suppressed as compared with the case of using gum ghatti that is not reduced in molecular weight. In the thickening of the liquid food, an excellent thickening property can be imparted as compared with the case of using gum ghatti which is not reduced in molecular weight.

In the present specification, "gum ghatti" is a polysaccharide derived from sap (secretion) of Anogeissus latifolia Wallich, and is a water-soluble polysaccharide that is usually dissolved in water up to about 30% by mass at room temperature or a higher temperature condition.

In the present specification, the low molecular weight gum ghatti is obtained by reducing the molecular weight of gum ghatti.

The low molecular weight gum ghatti used in the component (D) of the present invention is not particularly limited, and can be obtained by reducing the molecular size of gum ghatti by a thermal decomposition treatment, an acidolysis treatment, an enzymatic decomposition treatment or the like. Examples of the production method of the low molecular weight gum ghatti as the component (D) of the present invention include the production method described in WO 2018/062554, JP 2019-182886 A, or JP 2019-183144 A.

From the viewpoint of suppressing liquid phase separation, the total content of the component (D) of the present invention can be, for example, 0.05% by mass or more, 0.1% by mass or more, 0.2% by mass or more, 0.3% by mass or more, 0.4% by mass or more, or 0.5% by mass or more based on the total amount of the liquid food, and can be, for example, 2.5% by mass or less, 2% by mass or less, or 1.5% by mass or less based on the total amount of the liquid food. When the content of the low molecular weight gum ghatti is more than 2.5% by mass or less than 0.05% by mass, the suppression of liquid phase separation of the liquid food can be insufficient.

In order to impart an excellent thickening property in the stomach, the total content of the component (D) of the present invention can be, for example, 0.05% by mass or more, 0.1% by mass or more, 0.2% by mass or more, 0.3% by mass or more, 0.4% by mass or more, 0.5% by mass or more, 0.6% by mass or more, 0.7% by mass or more, 0.8% by mass or more, 0.9% by mass or more, or 1% by mass or more based on the total amount of the liquid food.

The weight average molecular weight of the low molecular weight gum ghatti used as the component (D) of the present invention is 0.7 × 10⁶ or less, for example, 0.6 × 10⁶ or less, 0.5 × 10⁶ or less, 0.4 × 10⁶ or less, 0.3 × 10⁶ or less, or 0.2 × 10⁶ or less, and for example, 0.09 × 10⁶ or more or 0.1 × 10⁶ or more from the viewpoint of remarkably exhibiting the effect of the present invention. When the weight average molecular weight of the low molecular weight gum ghatti is more than 0.7 × 10⁶ or less than 0.05 × 10⁶, the suppression of liquid phase separation of the liquid food can be insufficient.

In the low molecular weight gum ghatti formulation used in the production of a liquid food of the present invention, the molecular weight and molecular weight distribution of the low molecular weight gum ghatti are determined by the following analysis method using gel permeation chromatography (GPC) described in WO 2018/062554.

### <Measuring method of molecular weight and molecular weight distribution>

Detector: RI
Mobile phase: 100 mM K₂SO₄
Flow rate: 1.0 mL/min
Temperature: 40°C
Column: TSKgel GMPWXL 30 cm (Guard PWXL)
Injection: 100 µl
Pullulan standard: Shodex STANDARD P-82

The viscosity of an 8% by mass aqueous solution (20°C) of an aqueous low molecular weight gum ghatti solution used in the component (D) of the present invention is preferably 70 mPa·s or less, more preferably 60 mPa·s or less, still more preferably 50 mPa·s or less, still more preferably 40 mPa·s or less, particularly preferably 35 mPa·s or less, and more particularly preferably 30 mPa·s or less, and can be, for example, 1 mPa·s or more, 2 mPa·s or more, 3 mPa·s or more, 4 mPa·s or more, or 5 mPa·s or more.

The viscosity of a 15% by weight aqueous solution (20°C) of an aqueous low molecular weight gum ghatti solution of the component (D) of the present invention is preferably less than 100 mPa·s, more preferably less than 80 mPa·s, still more preferably less than 70 mPa·s, still more preferably less than 60 mPa·s, particularly preferably less than 50 mPa·s, and more particularly preferably less than 40 mPa·s, and can be, for example, 10 mPa·s or more and 15 mPa·s or more.

The viscosity of the aqueous low molecular weight gum ghatti solution is measured by placing 80 g of the aqueous gum ghatti solution in a 100 mL screw bottle (inner diameter: 3.7 cm) and using the following instrument and conditions.

### <Instrument and condition>

### B-type rotational viscometer (Brookfield-type viscometer), rotor NO. 2

Rotation speed: 60 rpm, measurement temperature: 20°C, measurement time: 1 minute

### ((E) Thickener that acts in presence of divalent metal ion)

The liquid food of the present invention can further include, as an optional component, a thickener that acts in presence of a divalent metal ion as the component (E).

The thickener of the component (E) of the present invention is preferably a thickener that acts in presence of a divalent metal ion regardless of liquid properties. The component (E) of the present invention is not particularly limited, but preferably acts in an acidic region to thicken the liquid food by the liquid food being mixed with gastric fluid in a stomach.

In the present specification, the acidic region is not particularly limited, but is, for example, a range having a pH of less than 5.5.

The component (E) of the present invention is not particularly limited, and examples thereof include one or two or more selected from the group consisting of alginic acid, alginates, pectins (HM pectin, LM pectin), carrageenan (kappa type, iota type, lambda type and the like), and gellan gums (including deacylated gellan gum). Among these, one or two or more selected from the group consisting of LM pectin and alginate is preferably contained.

Alginic acid or alginates are used as a thickener, a gelling agent and the like of a food additive, and are polysaccharides extracted from seaweed. Examples of alginates include, but are not particularly limited to, various salts such as sodium alginate, potassium alginate, and ammonium alginate. The alginic acid or salts thereof are commercially available. Alginates are commercially available, and examples thereof include "SAN SUPPORT ^{™} P-196" and "SAN SUPPORT ^{™} P-197" manufactured by San-Ei Gen F.F.I., Inc. As such alginic acid or salts thereof, those having acid resistance, heat resistance, pressure resistance, or stirring resistance are known, and those having any of these properties can be used.

Pectins are polysaccharides extracted from citrus fruits such as orange, lemon, lime, and grapefruit, and plants such as apple and sugar beet, and are divided into HM pectin (highmethoxyl pectin) having a degree of esterification of more than 50% and LM pectin (low-methoxyl pectin) having a degree of esterification of 50% or less. The pectin used in the present invention is preferably LM pectin, and more preferably a pectin having a degree of esterification of 40% or less. LM pectin is commercially available, and examples thereof include "SAN SUPPORT ^{™} P-165" manufactured by San-Ei Gen F.F.I., Inc. As such a pectin, those having acid resistance, heat resistance, pressure resistance, or stirring resistance are known, and those having any of these properties can be used.

Among gellan gums, deacylated gellan gum contains glucose, glucuronic acid and rhamnose as constituent sugars, and is obtained by removing an acyl group (an acetyl group and a glyceryl group) on 1-3 bonded glucose of the main chain of the gellan gum (native gellan gum) produced by fermentation by Sphingomonas elodea. The degree of deacylation of the gellan gum used in the present invention is not particularly limited.

The total content of the component (E) of the present invention is not particularly limited, but is preferably 0.05 to 5% by mass, more preferably 0.1 to 3% by mass, and still more preferably 0.3 to 2% by mass based on the total amount of the liquid food from the viewpoint of remarkably exhibiting the effect of the present invention.

The total content of the component (E) of the present invention can be, for example, 0.05% by mass or more, 0.1% by mass or more, 0.2% by mass or more, or 0.3% by mass or more, and can be, for example, 5% by mass or less, 4% by mass or less, 30 by mass or less, or 2% by mass or less based on the total amount of the liquid food.

### (Ratio of components)

In the liquid food of the present invention, the total content of the component (D) relative to 1 part by mass of the total content of the component (A) is not particularly limited, but is preferably 0.01 to 10 parts by mass, more preferably 0.02 to 5 parts by mass, and still more preferably 0.025 to 3 parts by mass from the viewpoint of remarkably exhibiting the effect of the present invention.

In the liquid food of the present invention, the total content of the component (D) relative to 1 part by mass of the total content of the component (A) can be, for example, 0.005 parts by mass or more, 0.008 parts by mass or more, 0.01 parts by mass or more, 0.02 parts by mass or more, or 0.025 parts by mass or more, and can be, for example, 10 parts by mass or less, 5 parts by mass or less, 3 parts by mass or less, 2 parts by mass or less, 1 part by mass or less, 0.8 parts by mass or less, 0.6 parts by mass or less, or 0.5 parts by mass or less from the viewpoint of remarkably exhibiting the effect of the present invention.

### (Other components)

The liquid food of the present invention can further include, in addition to the components (A) to (E), one or two or more of nutrient components (carbohydrates, minerals, vitamins and the like), salts, taste components, extracts, sweeteners, sugar alcohols, high-intensity sweeteners, bittering agents, acidulants, flavors, food coloring, food additives (pH adjusting agents (trisodium citrate and the like), defoaming agents, preservatives, antioxidants, thickeners, stabilizers and the like), polysaccharides (celluloses such as microcrystalline cellulose) and the like.

The liquid food of the present invention preferably includes carbohydrates, minerals, vitamins and the like in addition to the components (A) to (E).

As carbohydrates, saccharides and dietary fibers generally used for food can be used. Specific examples thereof include monosaccharides such as glucose and fructose; normal various saccharides such as disaccharides such as maltose and sucrose; sugar alcohols such as xylitol, sorbitol, glycerin, and erythritol; dextrins such as dextrin and cyclodextrin; oligosaccharides such as fructo-oligosaccharides, galactooligosaccharides, and lactosucrose; dietary fibers; and starch. The saccharide content of the liquid food in the present invention is not particularly limited, but is, for example, 0.5 to 30% by mass, preferably 1 to 20% by mass based on the total amount of the liquid food.

Examples of minerals other than the component (C) include sodium, potassium, iron, copper, and zinc. The minerals are not particularly limited, but salts treated as foods (including food additives) can be contained in the liquid food of the present invention.

The mineral content of the liquid food of the present invention can be appropriately set according to the recommended amount, adequate intake, target amount or upper limit amount described in "Japanese Diet Intake Criteria (2020 version)" formulated by the Ministry of Health, Labour and Welfare, and is usually 6,000 to 20,000 mg/L for sodium, 2,000 to 3,500 mg/L for potassium, 10 to 40 mg/L for iron, 1.6 to 9 mg/L for copper, and 7 to 30 mg/L for zinc.

Examples of vitamins include vitamin A, vitamins B₁, B₂, B₆, B₁₂, C, D, E, K, niacin, biotin, pantothenic acid, and folic acid.

The vitamin content of the liquid food of the present invention can be appropriately set according to the recommended amount, adequate intake, target amount or upper limit amount described in "Japanese Diet Intake Criteria (2020 version)", and is usually 540 to 2,000 mg/L for vitamin A, 0.8 to 10.0 mg/L for vitamin B₁, 1.0 to 100 mg/L for vitamin B₂, 1.0 to 1,000 mg/L for vitamin B₆, 2.4 to 100 mg/L for vitamin B₁₂, 100 to 1,000 mg/L for vitamin C, 0.0025 to 0.05 mg/L for vitamin D, 8 to 600 mg/L for vitamin E, 0.055 to 30 mg/L for vitamin K, 13 to 30 mg/L for niacin, 0.03 to 0.1 mg/L for biotin, 5 to 100 mg/L for pantothenic acid, and 0.2 to 1.0 mg/L as folic acid.

The caloric value of the liquid food of the present invention is not particularly limited, but is, for example, 0.1 to 7 kcal/mL, preferably 0.3 to 5 kcal/mL, more preferably 0.5 to 3 kcal/mL.

### (Form and usage)

The liquid food of the present invention is a food or drink which is liquid or has liquidity between a liquid state and a solid state.

One embodiment of the liquid food of the present invention is a liquid food which is in a state of low viscosity with liquidity before ingestion and is thickened by being mixed with gastric fluid in the stomach. In such an embodiment, the liquid food of the present invention preferably includes the component (E) in addition to the components (A) to (D). The "being thickened by being mixed with gastric fluid in the stomach" can be confirmed by thickening the liquid food by adding 0.2 to 2 parts by mass of simulated gastric fluid relative to 1 part by mass of the liquid food.

In the present specification, the simulated gastric fluid refers to simulated gastric fluid (a solution obtained by dissolving 2.0 g of sodium chloride in 7.0 mL of hydrochloric acid and water to make 1,000 mL and having a pH of 1.2) corresponding to the "Dissolution Test Solution 1" defined in "General Tests" in the Japanese Pharmacopoeia 17th Edition.

In the present specification, the viscosity of the liquid food or the mixture of the liquid food and the simulated gastric fluid is a value measured at a measurement temperature of 20°C and a rotation speed of 6 rpm using a B-type rotational viscometer. As the B-type rotational viscometer, for example, BL VISCOMETER manufactured by Toki Sangyo Co., Ltd. can be used. When the instrument is used, dedicated rotors NO. 1 to NO. 4 are selected according to the viscosity of the sample, and the viscosity is measured by the method described in Examples.

Specific examples of the liquid food include, for example, a dysphagia diet; an enteral nutrient (medicine to be administered by a tube or orally taken); and a concentrated liquid food.

The concentrated liquid food includes a natural concentrated liquid food in which a natural food is used as a raw material, and an artificial concentrated liquid food formed by artificially treating a natural food or artificially synthesizing a natural food. Examples of the artificial concentrated liquid food include a semi-digested nutrient (nitrogen source is protein), a digested nutrient (nitrogen source is amino acid and low molecular peptide), and an elemental diet (nitrogen source is composed only of amino acid). As the liquid food of the present invention, an artificial concentrated liquid food is preferred.

Examples of a mode of ingestion or administration of the liquid food of the present invention include direct ingestion, oral ingestion with a straw or a tube, nasal administration with a tube, administration via gastrostomy, and oral administration via a tube.

### (Physical properties, pH)

The pH of the liquid food of the present invention is preferably 5.5 to 8.

The viscosity of the liquid food of the present invention is not particularly limited, but is preferably 5 to 500 mPa·s, and more preferably 10 to 300 mPa·s.

The viscosity of the mixture obtained by adding 1/3 parts by mass of the simulated gastric fluid to 1 part by mass of the liquid food of the present invention and inverting and mixing the mixture after standing for 60 minutes is not particularly limited, but is preferably 1,000 to 30,000 mPa·s, more preferably 3,000 to 20,000 mPa·s, and still more preferably 4,000 to 20,000 mPa·s.

### (Characteristics)

In the liquid food of the present invention, liquid phase separation over time during storage is suppressed. Since the liquid food of the present invention can maintain a low viscosity when liquid phase separation during storage is suppressed, the liquid food has good tube fluidity, and can be quickly ingested or administered when the liquid food is ingested or administered by a tube.

Furthermore, the liquid food of the present invention has a smooth texture even after storage, and is easily ingested when orally ingested.

As one embodiment, when the liquid food of the present invention can be thickened when mixed with gastric fluid in the stomach, the liquid food has a characteristic of being excellent in the thickening property. For example, in the case of thickening in the stomach, a liquid food is partly excessively and rapidly thickened under an acidic region, and thus a part where the viscosity does not increase is produced in a part, so that the viscosity of the whole does not increase and the thickening property may be impaired. However, the liquid food of the present invention can maintain the thickening property.

### (Production method)

The liquid food of the present invention can be produced by mixing the components (A) to (E) and other components by a conventional method.

The production method of the liquid food of the present invention preferably further includes a homogenization step, a step of filling into a container, and a heat sterilization step. The homogenization step is not particularly limited, and examples thereof include homogenization using a high-pressure homogenizer. The heat sterilization step is not particularly limited, and examples thereof include a retort sterilization treatment in which heating is performed at 105 to 131°C for 5 to 60 minutes after filling into a container.

### [Method for suppressing liquid phase separation of liquid food or imparting excellent thickening property to liquid food]

The method of the present invention includes incorporating (D) a low molecular weight gum ghatti having a weight average molecular weight of 0.05 × 10⁶ to 0.7 × 10⁶ into a liquid food including (A) a protein and/or a decomposition product thereof, (B) a lipid, and (C) a salt containing calcium or magnesium and is used for suppressing liquid phase separation or imparting an excellent thickening property (improving a thickening property).

In one embodiment, the method of the present invention includes incorporating 0.05 to 2.5% by mass of (D) a low molecular weight gum ghatti having a weight average molecular weight of 0.05 × 10⁶ to 0.7 × 10⁶ into a liquid food including (A) a protein and/or a decomposition product thereof, (B) a lipid, (C) a salt containing calcium or magnesium, and (E) a thickener that acts in presence of a divalent metal ion, and is used for suppressing liquid phase separation of the liquid food or imparting an excellent thickening property.

In the method of the present invention, the components (A) to (E), other components, preferred forms and the like of the liquid food are the same as those described in the above [Liquid food].

The liquid food of the method of the present invention corresponds to one that does not include the component (D) in the above [Liquid food].

In the method of the present invention, it is preferred that the component (D) be applied to the liquid food so as to be the amount of the component (D) of the liquid food described in the section of the [Liquid food] described above.

### [Agent for suppressing liquid phase separation of liquid food or imparting excellent thickening property]

The agent of the present invention includes (D) a low molecular weight gum ghatti having a weight average molecular weight of 0.05 × 10⁶ to 0.7 × 10⁶, and is used for suppressing liquid phase separation of a liquid food or imparting an excellent thickening property (improving a thickening property) to a liquid food, wherein the liquid food includes (A) a protein and/or a decomposition product thereof, (B) a lipid, and (C) a salt containing calcium or magnesium.

In one embodiment, the agent of the present invention includes (D) a low molecular weight gum ghatti having a weight average molecular weight of 0.05 × 10⁶ to 0.7 × 10⁶, and is used for suppressing liquid phase separation of a liquid food or imparting an excellent thickening property to a liquid food, wherein the liquid food includes (A) a protein and/or a decomposition product thereof, (B) a lipid, (C) a salt containing calcium or magnesium, and (E) a thickener that acts in presence of a divalent metal ion.

As the low molecular weight gum ghatti as the component (D) used in the agent of the present invention, the same low molecular weight gum ghatti as the low molecular weight gum ghatti as the component (D) in the section of [Liquid food] described above can be used.

The shape of the agent of the present invention is not particularly limited. Examples thereof include solid shapes (for example, powder, granule, tablet and the like) and liquid shapes (for example, solution, dispersion and the like).

The content of the component (D) in the agent of the present invention is not particularly limited, but is, for example, 5 to 100% by mass, preferably 10 to 90% by mass, more preferably 15 to 85% by mass, and still more preferably 20 to 80% by mass based on the total amount of the agent.

Among agents of the present invention, those in a solid form preferably further include an excipient. Examples of the excipient include starch decomposition products (dextrin, powdered sugar and the like), saccharides (monosaccharides (glucose, fructose and the like), disaccharides (for example, sucrose, lactose, maltose, trehalose and the like), oligosaccharides (cellooligosaccharide, malto-oligosaccharide, fructo-oligosaccharide and the like), sugar alcohols (xylitol, sorbitol, lactitol, maltitol and the like), reduced saccharides and the like), and dietary fibers (for example, indigestible dextrin, polydextrose, an enzymatically decomposed product of guar gum and the like).

When the agent of the present invention includes an excipient, the content thereof is not particularly limited, and is, for example, 0.01 to 90% by mass, preferably 3 to 80% by mass, more preferably 4 to 75% by mass, and still more preferably 5 to 70% by mass based on the total amount of the agent.

The agent of the present invention can include metal salts, emulsifiers and the like for the purpose of improving dispersibility. The type of the metal salts is not particularly limited, and examples thereof include potassium salts, sodium salts, calcium salts, and magnesium salts, and specific examples thereof include chlorides, hydroxides, lactates, citrates, gluconates, phosphates, sulfates, and malates. In the present invention, metal salts that are permitted to be used in food and drink or oral medicines are preferably used. Examples thereof include calcium chloride, potassium chloride, sodium chloride, magnesium chloride, calcium lactate, sodium citrate, sodium gluconate, and potassium gluconate. Preferred metal salts are one or more selected from the group consisting of calcium chloride, potassium chloride, sodium citrate, and sodium gluconate.

The content of the metal salt in the agent of the present invention is not particularly limited, and is, for example, 0.1 to 15% by mass, preferably 0.5 to 12% by mass, more preferably 0.8 to 8% by mass, still more preferably 0.8 to 6% by mass, and still more preferably 1 to 5% by mass based on the total amount of the agent.

Similarly, the type of the emulsifier is not particularly limited, and examples thereof include sucrose fatty acid ester, glycerin fatty acid ester (for example, monoglycerin fatty acid ester, polyglycerin fatty acid ester, polyglycerol ester of interesterified ricinoleic acid, organic acid monoglyceride and the like), propylene glycol fatty acid ester, sorbitan fatty acid ester, lecithin, enzymatically decomposed lecithin, enzymatically treated lecithin, sodium stearoyl lactate, calcium stearoyl lactate, quillaja extract, saponin, and polysorbates (for example, Polysorbate 20, Polysorbate 60, Polysorbate 65, Polysorbate 80).

The content of the emulsifier in the agent of the present invention is not particularly limited, and is, for example, 0.1 to 10% by mass based on the total amount of the agent.

The agent of the present invention can further include, without particular limitation, one or more of nutrient components that can be used for food, food additives (dietary fiber, pH adjuster, preservative, antioxidant, thickener, stabilizer and the like) and the like in addition to the component (D), the excipient, the metal salt, and the emulsifier.

The liquid food in which the agent of the present invention is used corresponds to one that does not include the component (D) among the liquid foods described in the section of [Liquid food] described above. The components (A) to (E) and other components, preferred forms and the like are the same as those described in the section of [Liquid food] described above.

The agent of the present invention is preferably compounded into a target liquid food so that the liquid food has the content of the component (D), for example, as described in the section of [Liquid food] described above based on the total amount of the liquid food.

### [Use of low molecular weight gum ghatti for suppressing liquid phase separation or imparting excellent thickening property to liquid food]

The present invention includes use of (D) a low molecular weight gum ghatti having a weight average molecular weight of 0.05 × 10⁶ to 0.7 × 10⁶ for suppressing liquid phase separation of a liquid food or imparting an excellent thickening property to a liquid food, wherein the liquid food includes (A) a protein and/or a decomposition product thereof, (B) a lipid, and (C) a salt containing calcium or magnesium. In one embodiment, the liquid food can further include (E) a thickener that acts in presence of a divalent metal ion. These components (A) to (E) and specific aspects are the same as those described in the section of [Liquid food] above.

### EXAMPLES

Hereinafter, the present invention will be described in more detail with Examples. However, these examples do not limit the present invention. The "part" and "%" in Examples mean "part by mass" and "% by mass", respectively. The mark "*" in the sentence indicates that the product is manufactured by San-Ei Gen F.F.I., Inc., and the mark " 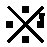 " in the sentence indicates a trademark of San-Ei Gen F.F.I., Inc.

### [Material]

In the following Test Examples, GATIFOLIA SD (*) (weight average molecular weight: 1.36 million) was used as gum ghatti, and low molecular weight gum ghattis (weight average molecular weight: 20,000, 90,000, 150,000, 200,000, 400,000, 600,000, 750,000) prepared in accordance with the production method described in WO 2018/062554 were used as the low molecular weight gum ghattis.

The viscosities of 15% by mass aqueous solutions of the gum ghatti and the low molecular weight gum ghatti (weight average molecular weight: 150,000) were measured. In a 100 mL screw bottle (inner diameter: 3.7 cm), 80 g of each 15% by mass aqueous solution was put, and measurement was performed under the following conditions using the following instrument.

### <Instrument and condition>

B-type rotational viscometer (Brookfield-type viscometer), rotor NO. 2

Rotation speed: 60 rpm, measurement temperature: 20°C, measurement time: 1 minute

As a result, the viscosity of the gum ghatti used was 328 mPa·s at a concentration of 15% by mass, and the viscosity of the low molecular weight gum ghatti (weight average molecular weight: 150,000) was 17 mPa·s at a concentration of 15% by mass.

### [Test Example 1. Study 1 of intragastrically thickening liquid food sample]

(Preparation of intragastrically thickening liquid food sample)

An intragastrically thickening liquid food sample containing sodium alginate as a thickener was prepared according to the formulation of Table 1. The preparation method is shown below. The type of the raw material corresponding to No. 3 in Table 1 and the content thereof based on the total amount of the liquid food of each sample were described in the table showing the evaluation results.

### <Preparation method>

(1) While deionized water, the defoaming agent of No. 1, and the rapeseed oil of No. 2 were mixed and stirred, a mixture of No. 3 to 10 was added, heated to 80°C, and dissolved by heating for 10 minutes.
(2) The total amount of the obtained solution was adjusted with deionized water, and homogenization treatment was performed at a pressure of 50 MPa using a high-pressure homogenizer.
(3) The solution was filled into a container, cooled with running water for 30 minutes, and then subjected to a retort sterilization treatment at 121°C for 10 minutes. The obtained liquid food was cooled to room temperature and then subjected to various evaluations.

**[Table 1]**

| | | | (%) |
|---|---|---|---|
| 1 | Deforming agent | | 0.05 |
| 2 | Rapeseed oil | | 2 |
| 3 | | (described in the table showing evaluation results) | |
| 4 | Dextrin | | 15 |
| 5 | Protein | | 4.5 |
| 6 | Sodium alginate (SAN SUPPORT 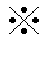 P-196 (*)) | | 0.45 |
| 7 | Microcrystalline cellulose | | 1.2 |
| 8 | Trisodium citrate | | 0.05 |
| 9 | Calcium phosphate | | 0.6 |
| 10 | Deionized water | | Remainder |
| | Total | | 100 |

### (Evaluation method of liquid food)

The liquid phase separation, tube fluidity, and viscosities before and after mixing with gastric fluid of the intragastrically thickening liquid food samples according to the above formulation were evaluated by the following methods.

### (1) Liquid phase separation

Immediately after the production of each sample, the sample is uniformly clouded, but the nutrient components are gradually separated, and a transparent to translucent layer appears immediately below the liquid level or on the bottom surface. This is liquid phase separation. Therefore, as evaluation of liquid phase separation, observation of appearance after storing each sample filled in a container and measurement of the thickness of the aqueous layer were performed.

When the presence of the aqueous layer was not visually confirmed, the liquid phase separation was determined to be suppressed and the judgement of Good (o) was given to the sample, and when the presence of the aqueous phase was visually confirmed, the liquid phase separation was determined to have occurred and the judgement of Poor (×) was given to the sample.

### (2) Tube fluidity

For each sample, a tube having a size of 8 Fr (outer diameter 2.7 mm) and a length of 120 cm (manufactured by JMS Co. Ltd., model number: JF-C08120Q) was used at 25°C, and the tube (120 cm) was hung vertically and a funnel was connected to the upper end. The sample adjusted to 20°C was allowed to pass through the tube by gravity fall from the funnel, and the amount of the sample flowing for 30 minutes after the sample was discharged from the lower end of the tube was defined as a "tube flow rate per 30 minutes". The tube fluidity was judged as very good (o) when the tube flow rate per 30 minutes was 200 mL or more, Good (o) when the tube flow rate was 150 mL or more and less than 200 mL, and Poor (×) when the tube flow rate was less than 150 mL.

### (3) Change in viscosity in mixing with gastric fluid

As the gastric fluid, simulated gastric fluid (a solution obtained by dissolving 2.0 g of sodium chloride in 7.0 mL of hydrochloric acid and water to make 1,000 mL and having a pH of 1.2) corresponding to the "Dissolution Test Solution 1" defined in "General Tests" in the Japanese Pharmacopoeia 17th Edition was used. 1/3 parts by mass of simulated gastric fluid was added to 1 part by mass of each sample, and the sample after being sufficiently inverted and mixed was allowed to stand at 20°C for 60 minutes, and then used as a sample 60 minutes after mixing with gastric fluid. The viscosities of the sample before mixing with the gastric fluid and 60 minutes after mixing with the gastric fluid were measured at 20°C using BL VISCOMETER manufactured by Toki Sangyo Co., Ltd. at a rotation speed of 6 rpm by using a NO. 1 rotor when the viscosity was 1,000 mPa·s or less, a NO. 2 rotor when the viscosity was more than 1,000 mPa·s and 5,000 mPa·s or less, a NO. 3 rotor when the viscosity was more than 5,000 mPa·s and 20,000 mPa·s or less, and a NO. 4 rotor when the viscosity was more than 20,000 mPa·s.

### (Comparison of effect of suppressing liquid phase separation)

The results of evaluation of liquid phase separation after storage at 25°C for 10 days and tube fluidity at 25°C of an intragastrically thickening liquid food including 0.5% by mass of a low molecular weight gum ghatti (molecular weight: 150,000) (Example 1-1), 0.5% by mass of gum ghatti (Comparative Example 1-1), 0.5% by mass of sucrose fatty acid ester (HLB; 5) (Comparative Example 1-2), or 1.1% sucrose fatty acid ester (HLB; 16) (Comparative Example 1-3) as the No. 3 component in Table 1 are shown in Table 2 and Fig. 1. In Example 1-1, no liquid phase separation was observed after storage for 10 days, and good stability was exhibited.

On the other hand, in Comparative Examples 1 to 3 in which gum ghatti or sucrose fatty acid ester was used, liquid phase separation was observed after storage for 10 days.

**[Table 2]**

| Sample | No. 3 component | Liquid phase separation after storage at 25°C for 10 days | | Tube fluidity | |
|---|---|---|---|---|---|
| | | Separation state | Evaluation | Tube flow rate per 30 min (mL) | Evaluation |
| Example 1-1 | Low molecular weight gum ghatti 0.5% | No separation | ○ | 215 | ⊙ |
| Comparative Example 1-1 | Gum ghatti 0.5% | Top 5 mm separation | × | 130 | × |
| Comparative Example 1-2 | Sucrose fatty acid ester (HLB; 5) 0.5% | Top 3 mm separation | × | 234 | ⊙ |
| Comparative Example 1-3 | Sucrose fatty acid ester (HLB; 16) 1.1% | Top 4 mm separation | × | 233 | ⊙ |

Therefore, it was found that in the presence of a protein, a lipid, a thickener that acts in the presence of a divalent metal ion, and a divalent metal ion, a low molecular weight gum ghatti more suppresses liquid phase separation as compared to gum ghatti or other emulsifiers.

### (Comparison of tube fluidity)

The results of evaluation of the tube fluidity for each sample are shown in the same Table 2. It was found that when the low molecular weight gum ghatti was used, tube fluidity was superior to that of gum ghatti.

### (Comparison of thickening property)

In addition to Example 1-1 above, as shown in Table 3, Example 1-2, Example 1-3, Comparative Example 1-4, and Comparative Example 1-5 in which the amount of a low molecular weight gum ghatti (weight average molecular weight: 150,000) or gum ghatti as the No. 3 component in Table 1 was increased to 1.0% by mass and 1.5% by mass were prepared. For these samples and Example 1, the viscosities before mixing with the simulated gastric fluid and 60 minutes after mixing with the simulated gastric fluid were measured. The results are shown in the same Table 3.

**[Table 3]**

| Sample | No. 3 component | Viscosity (mPa·s) | |
|---|---|---|---|
| | | Before mixing with gastric fluid | 60 min after mixing with gastric fluid |
| Example 1-1 | Low molecular weight gum ghatti 0.5% | 77 | 10,620 |
| Example 1-2 | Low molecular weight gum ghatti 1.0% | 84 | 9,750 |
| Example 1-3 | Low molecular weight gum ghatti 1.5% | 89 | 11,700 |
| Comparative Example 1-4 | Gum ghatti 1.0% | 99 | 8,340 |
| Comparative Example 1-5 | Gum ghatti 1.5% | 118 | 6,070 |

In the Comparative Examples containing gum ghatti, the viscosity 60 minutes after mixing with gastric fluid decreased as the addition amount increased. At this time, the gels obtained by adding gastric fluid to Comparative Examples were loose and non-uniform, separation between the gel portion and the liquid portion was observed, and a decrease in the thickening property was observed. On the other hand, when gastric fluid was added to the samples of Examples in which a low molecular weight gum ghatti was used, all of the samples were uniformly gelled, and a sufficient thickening property was observed.

From the above, it was found that when a low molecular weight gum ghatti is used, the thickening property is not impaired even when the addition amount is increased, as compared with the case where gum ghatti is used, and thus a sufficient thickening property in the stomach can be expected even if increase of concentration of the additive is needed for suppression of liquid phase separation.

### [Test Example 2. Study 2 of intragastrically thickening liquid food sample]

### (Preparation of intragastrically thickening liquid food)

Intragastrically thickening liquid food samples containing sodium alginate as a thickener were prepared according to the formulation of Table 4 by the same method as in Test Example 1. The type of the raw material corresponding to No. 3 in Table 4 and the content thereof based on the total amount of the liquid food of each sample were described in the table showing the evaluation results.

**[Table 4]**

| | | | (%) |
|---|---|---|---|
| 1 | Deforming agent | | 0.05 |
| 2 | Rapeseed oil | | 1.7 |
| 3 | | (described in the table showing evaluation results) | |
| 4 | Dextrin | | 12 |
| 5 | Protein | | 3.4 |
| 6 | Sodium alginate (SAN SUPPORT 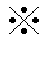 P-197 (*)) | | 0.48 |
| 7 | Microcrystalline cellulose | | 1.1 |
| 8 | Trisodium citrate | | 0.2 |
| 9 | Calcium phosphate | | 0.6 |
| 10 | Deionized water | | Remainder |
| Total | | | 100 |

### (Comparison of effect of suppressing liquid phase separation)

For the intragastrically thickening liquid food samples prepared using a low molecular weight gum ghatti (molecular weight: 150,000) at different concentrations as the No. 3 component in Table 4, the effects of suppressing liquid phase separation after storage at 25°C for 3 days were compared in the same manner as in Test Example 1. As shown in Fig. 2, in all of Examples 2-1 to 2-6 in which more than 0.02% by mass and less than 3.0% by mass of a low molecular weight gum ghatti as addition amount were contained, liquid phase separation was suppressed.

The viscosities of the samples of Examples 60 minutes after mixing with the simulated gastric fluid exceeded 4,000 mPa·s, and the thickening property was good.

### (Study on molecular weight of low molecular weight gum ghatti)

For the intragastrically thickening liquid food samples prepared by adding 1.0% by mass of low molecular weight gum ghattis having various weight average molecular weights as the No. 3 component in Table 4, viscosities 60 minutes after mixing with simulated gastric fluid were compared in the same manner as in Test Example 1. The results are shown in Table 5. When the weight average molecular weight of the low molecular weight gum ghatti was more than 0.02 × 10⁶ and less than 0.6 × 10⁶, the viscosity was more than 4,000 mPa·s, and the thickening property of the intragastrically thickening liquid food was good.

**[Table 5]**

| Sample | Example 2-7 | Example 2-8 | Example 2-9 | Example 2-10 | Example 2-11 | Example 2-12 |
|---|---|---|---|---|---|---|
| Weight average molecular weight (1 million) of low molecular weight gum ghatti as No. 3 component | 0.02 | 0.09 | 0.15 | 0.20 | 0.40 | 0.60 |
| Viscosity 60 minutes after mixing with gastric fluid (mPa·s) | 3,840 | 5,820 | 4,270 | 4,680 | 4,610 | 3,680 |

In each sample, the content of the low molecular weight gum ghatti is 1.0% by mass.

### [Test Example 3. Study 3 of intragastrically thickening liquid food sample]

### (Preparation of intragastrically thickening liquid food)

An intragastrically thickening liquid food sample containing pectin as a thickener was prepared according to the formulation of Table 6 by the same method as in Test Example 1. The type of the raw material corresponding to No. 3 in Table 6 and the content thereof based on the total amount of the liquid food of each sample were described in the table showing the evaluation results.

**[Table 6]**

| | | | (%) |
|---|---|---|---|
| 1 | Deforming agent | | 0.05 |
| 2 | Rapeseed oil | | 1.7 |
| 3 | | (described in the table showing evaluation results) | |
| 4 | Dextrin | | 12 |
| 5 | Protein | | 3.4 |
| 6 | Pectin (SAN SUPPORT 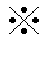 P-165 (*)) | | 0.5 |
| 7 | Microcrystalline cellulose | | 1.1 |
| 8 | Trisodium citrate | | 0.2 |
| 9 | Calcium phosphate | | 0.6 |
| 10 | Deionized water | | Remainder |
| Total | | | 100 |

### (Comparison of effect of suppressing liquid phase separation)

Intragastrically thickening liquid food samples containing 0.5% by mass of a low molecular weight gum ghatti (weight average molecular weight: 150,000) or ghatti gum as the No. 3 component in Table 6 were prepared, and the effects of suppressing liquid phase separation after storage at 25°C for 3 days were compared in the same manner as in Test Example 1. The results are shown in Fig. 3. Same as in Test Example 1, in the sample of the Example in which a low molecular weight gum ghatti was used, liquid phase separation was not observed even after storage for 3 days. On the other hand, in the sample of the Comparative Example in which gum ghatti was used, liquid phase separation was not observed after storage for 1 day, but liquid phase separation was observed after storage for 3 days.

### (Comparison of thickening property when low molecular weight gum ghatti is used)

For the intragastrically thickening liquid food samples prepared by adding 1.0% by mass of low molecular weight gum ghattis having different weight average molecular weights as the No. 3 component in Table 6, viscosities 60 minutes after mixing with simulated gastric fluid were compared in the same manner as in Test Example 1. The results are shown in Table 7. It was found that in Examples in which low molecular weight gum ghattis were used, the viscosities 60 minutes after mixing with gastric fluid were higher as compared with Comparative Examples in which gum ghatti was used, and the thickening property of the intragastrically thickening liquid food is better. In the samples of Comparative Examples, the gels after mixing with gastric fluid were loose, and the thickening property was impaired. As the addition amount of gum ghatti was increased, the viscosities of the gels 60 minutes after mixing with gastric fluid further decreased.

**[Table 7]**

| Sample | No. 3 component | Viscosity (mPa·s) | |
|---|---|---|---|
| | | Before mixing with gastric fluid | 60 min after mixing with gastric fluid |
| Example 3-1 | 0.5% by mass of low molecular weight gum ghatti | 138 | 4,130 |
| Example 3-2 | 1% by mass of low molecular weight gum ghatti | 148 | 4,200 |
| Example 3-3 | 2% by mass of low molecular weight gum ghatti | 227 | 4,400 |
| Comparative Example 3-1 | 0.5% by mass of gum ghatti | 130 | 3,100 |
| Comparative Example 3-2 | 1% by mass of gum ghatti | 152 | 3,280 |
| Comparative Example 3-3 | 2% by mass of gum ghatti | 215 | 2,480 |

### [Test Example 4. Study of general liquid food]

### (Preparation of general liquid food)

Samples of an orally ingestible general liquid food were prepared according to the formulation of Table 8. The preparation method is shown below. The type of the raw material corresponding to No. 3 in Table 8 and the content thereof based on the total amount of the liquid food of each sample were described in the table showing the evaluation results.

### <Preparation method>

(1) A mixture of No. 3 to 14 was added to the mixed liquid of deionized water and No. 1 and 2, and the mixture was stirred at room temperature for 10 minutes.
(2) The mixture was heated to 80°C and stirred for 10 minutes, and then No. 15 was added.
(3) The total amount of the obtained solution was adjusted with deionized water, and homogenization treatment was performed at a pressure of 50 MPa using a high-pressure homogenizer.
(4) The solution was filled into a container, cooled with running water for 30 minutes, and then subjected to a retort sterilization treatment at 121°C for 10 minutes. The obtained liquid food was cooled to room temperature and then subjected to various evaluations.

**[Table 8]**

| | | | (%) |
|---|---|---|---|
| 1 | Deforming agent | | 0.05 |
| 2 | Rapeseed oil | | 1.9 |
| 3 | | (described in the table showing evaluation results) | |
| 4 | Maltodextrin | | 14 |
| 5 | Indigestible dextrin | | 2.2 |
| 6 | Whey protein | | 2.1 |
| 7 | Whey protein decomposition product | | 3.6 |
| 8 | Calcium chloride | | 0.2 |
| 9 | Magnesium chloride | | 0.13 |
| 10 | Sodium chloride | | 0.15 |
| 11 | Potassium chloride | | 0.28 |
| 12 | Sodium iron citrate | | 0.01 |
| 13 | Sucralose formulation (SAN SWEET 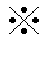 SU-100 (*)) | | 0.07 |
| 14 | Thaumatin formulation (NEO SANMARK 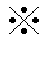 AG (*)) | | 0.05 |
| 15 | Flavor | | 0.2 |
| 16 | Deionized water | | Remainder |
| Total | | | 100 |

### (Comparison of effect of suppressing liquid phase separation)

For the liquid foods for oral ingestion containing various components as the No. 3 component in Table 8, liquid phase separation when stored at 25°C or 7°C was evaluated in the same manner as in Test Example 1. The results are shown in Figs. 4A and 4B. In Example 4-1 in which a low molecular weight gum ghatti was contained as the No. 3 component, liquid phase separation was not observed even after storage at 25°C or 7°C for 3 days, and good stability was exhibited. On the other hand, in Comparative Examples in which gum ghatti, a sucrose fatty acid ester, or a succinic acid monoglyceride was used as the No. 3 component, liquid phase separation was observed after storage for 3 days.

### (Study on content of low molecular weight gum ghatti in effect of suppressing liquid phase separation)

For the general liquid food samples prepared using a low molecular weight gum ghatti (molecular weight: 150,000) at different concentrations as the No. 3 component in Table 8, the effects of suppressing liquid phase separation after storage at 25°C for 3 days were compared in the same manner as in Test Example 1. The results are shown in Fig. 5. In all of the general liquid foods of Examples in which more than 0.02% by mass and less than 5.0% by mass of a low molecular weight gum ghatti as addition amount was contained, liquid phase separation was suppressed.

### (Study on molecular weight of low molecular weight gum ghatti)

For general liquid food samples prepared by adding 0.5% by mass of low molecular weight gum ghattis having various weight average molecular weights as the No. 3 component in Table 8, liquid phase separation when stored at 25°C was evaluated in the same manner as in Test Example 1. The results are shown in Fig. 6. It was found that liquid phase separation is suppressed when the weight average molecular weight of the low molecular weight gum ghatti is more than 0.02 × 10⁶ and less than 0.75 × 10⁶ in the liquid food.

### [Test Example 5. Study of general liquid food]

### (Preparation of general liquid food)

Samples of an orally ingestible general liquid food were prepared according to the formulation of Table 9. The preparation method is shown below. The type of the raw material corresponding to No. 3 in Table 9 and the content based on the total amount of the liquid food of each sample were described in the table showing the evaluation results.

### <Preparation method>

(1) A mixture of No. 3 to 13 was added to the mixed liquid of deionized water and No. 1 and 2, and the mixture was stirred at room temperature for 10 minutes.
(2) The mixture was heated to 80°C and stirred for 10 minutes, and then No. 14 was added.
(3) The total amount of the obtained solution was adjusted with deionized water, and homogenization treatment was performed at a pressure of 50 MPa using a high-pressure homogenizer.
(4) The solution was filled into a container, cooled with running water for 30 minutes, and then subjected to a retort sterilization treatment at 121°C for 10 minutes. The obtained liquid food was cooled to room temperature and then subjected to various evaluations.

**[Table 9]**

| | | (%) |
|---|---|---|
| 1 | Deforming agent | 0.05 |
| 2 | Rapeseed oil | 1.9 |
| 3 | (described in the table showing evaluation results) | |
| 4 | Maltodextrin | 14 |
| 5 | Indigestible dextrin | 2.2 |
| 6 | Whey protein | 6.2 |
| 7 | Calcium chloride | 0.2 |
| 8 | Magnesium chloride | 0.13 |
| 9 | Sodium chloride | 0.15 |
| 10 | Potassium chloride | 0.28 |
| 11 | Sodium iron citrate | 0.01 |
| 12 | Sucralose formulation (SAN SWEET 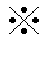 SU-100 (*)) | 0.07 |
| 13 | Thaumatin formulation (NEC SANMARK 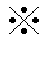 AG (*)) | 0.05 |
| 14 | Flavor | 0.2 |
| 15 | Deionized water | Remainder |
| Total | | 100 |

### (Comparison of tube fluidity)

For general liquid foods containing various components as the No. 3 component in Table 9, the tube fluidity was evaluated by the above method. The results are shown in Table 10. Also for general liquid foods, the Example in which a low molecular weight gum ghatti was used had better tube fluidity than Comparative Examples in which a low molecular weight gum ghatti was not used.

**[Table 10]**

| Sample | | Example 5-1 | Comparative Example 5-1 | Comparative Example 5-2 | Comparative Example 5-3 |
|---|---|---|---|---|---|
| No. 3 component | | Low molecular weight gum ghatti 1.0% | Gum ghatti 1.0% | None | Soybean polysaccharide |
| Tube fluidity | Tube flow rate per 30 min (mL) | 224 | 187 | 148 | 40 |
| | Evaluation | ⊙ | ○ | × | × |

### (Comparison of texture)

General liquid foods to which various components were added as the No. 3 component in Table 9 were prepared, and sensory evaluation was performed by a sensory evaluation panel. The sensory evaluation panel was composed of 6 persons (4 males and 2 females; average age: 28.3 years) who were engaged in research and development of food and were skilled in sensory evaluation of food. Each panelist ate 15 g of liquid foods, and the smoothness was evaluated by a visual analog scale (VAS) method. That is, the panelists marked for scoring the position on the straight line corresponding to the degree of smoothness perceived by them, with the left end on the straight line of 100 mm as 0 (no feeling of smoothness at all) and the right end as 100 (very smooth). Then, when the average was 50 points or more, the smoothness was judged as Good, and when the average was less than 50 points, the smoothness was judged as Poor.

The results are shown in Table 11. The general liquid food of Example 5-2 in which a low molecular weight gum ghatti was used had good smoothness, but the general liquid foods of Comparative Examples had poor smoothness. As a result of performing an unpaired t-test between the average of the scores of the general liquid food in Example 5-2 and the average of the scores of the general liquid food in each Comparative Example, it was found that all the p values were less than 0.05, and there were significant differences. Therefore, it was found that the smoothness of a liquid food is improved by applying a low molecular weight gum ghatti.

**[Table 11]**

| Sample | No. 3 component | Evaluation of smoothness | | | | | | | |
|---|---|---|---|---|---|---|---|---|---|
| | | Subject A | Subject B | Subject C | Subject D | Subject F | Subject G | Average | p value (vs Example 5-2) |
| Example 5-2 | 0.5% Low molecular weight gum ghatti | 54 | 66 | 58 | 46 | 51 | 56 | 55.2 | - |
| Comparative Example 5-3 | None | 3 | 11 | 11 | 7 | 14 | 6 | 8.7 | 5.0 × 10⁻⁸ |
| Comparative Example 5-4 | 0.5% Gum ghatti | 14 | 45 | 43 | 42 | 35 | 47 | 37.7 | 1.2 × 10⁻² |
| Comparative Example 5-5 | 0.3% Succinic acid monoglyceride (HLB; 5) | 17 | 17 | 28 | 24 | 24 | 11 | 20.2 | 3.0 × 10⁻⁶ |
| Comparative Example 5-6 | 0.15% Succinic acid monoglyceride (HLB; 5) + 0.15% Sucrose fatty acid ester (HLB; 16) | 1 | 22 | 18 | 13 | 26 | 17 | 16.2 | 5.6 × 10⁻⁶ |

## Claims

1. A liquid food, comprising:
(A) a protein and/or a decomposition product thereof;
(B) a lipid;
(C) a salt containing calcium or magnesium; and
(D) a low molecular weight gum ghatti having a weight average molecular weight of 0.05 × 10⁶ to 0.7 × 10⁶.

2. The liquid food according to claim 1, further comprising (E) a thickener that acts in presence of a divalent metal ion.

3. The liquid food according to claim 1 or 2, which is ingested orally or via a tube and thickened by being mixed with gastric fluid in a stomach.

4. The liquid food according to any one of claims 1 to 3, having a pH of 5.5 to 8.

5. The liquid food according to any one of claims 1 to 4, wherein a content of the low molecular weight gum ghatti having a weight average molecular weight of 0.05 × 10⁶ to 0.7 × 10⁶ (D) is 0.05 to 2.5% by mass.

6. A method for suppressing liquid phase separation of a liquid food or imparting an excellent thickening property to a liquid food, comprising the step of:
incorporating (D) a low molecular weight gum ghatti having a weight average molecular weight of 0.05 × 10⁶ to 0.7 × 10⁶ into the liquid food,
wherein the liquid food includes (A) a protein and/or a decomposition product thereof, (B) a lipid, and (C) a salt containing calcium or magnesium.

7. The method according to claim 6, wherein the liquid food further includes (E) a thickener that acts in presence of a divalent metal ion.

8. The method according to claim 6 or 7, wherein the liquid food is ingested orally or via a tube and thickened by being mixed with gastric fluid in a stomach.

9. The method according to any one of claims 6 to 8, wherein an incorporation amount of the low molecular weight gum ghatti having a weight average molecular weight of 0.05 × 10⁶ to 0.7 × 10⁶ (D) is 0.05 to 2.5% by mass based on a total amount of the liquid food.

10. An agent for suppressing liquid phase separation of a liquid food or imparting an excellent thickening property to a liquid food, comprising:
(D) a low molecular weight gum ghatti having a weight average molecular weight of 0.05 × 10⁶ to 0.7 × 10⁶,
wherein the liquid food includes (A) a protein and/or a decomposition product thereof, (B) a lipid, and (C) a salt containing calcium or magnesium.

11. The agent according to claim 10, wherein the liquid food is ingested orally or via a tube and then thickened by being mixed with gastric fluid in a stomach.

12. The agent according to claim 10 or 11, wherein the liquid food further includes (E) a thickener that acts in presence of a divalent metal ion.
